Europäisches Patentamt

(19) European Patent Office

Office européen des brevets

(11) EP 0 540 941 B1

## (12) EUROPEAN PATENT SPECIFICATION

(45) Date of publication and mention
of the grant of the patent:
**03.06.1998 Bulletin 1998/23**

(51) Int. Cl.⁶: $B29C\ 43/20$, $B29C\ 41/04$

(21) Application number: 92118016.2

(22) Date of filing: 21.10.1992

(54) **Multi-layer molded article and production process thereof**

Mehrschichtiger geformter Gegenstand und Verfahren zu dessen Herstellung

Objet multicouches moulé et procédé pour sa fabrication

(84) Designated Contracting States:
**DE FR GB IT NL**

(30) Priority: **23.10.1991 JP 275380/91**

(43) Date of publication of application:
**12.05.1993 Bulletin 1993/19**

(73) Proprietor:
**SUMITOMO CHEMICAL COMPANY LIMITED
Osaka-shi, Osaka 541 (JP)**

(72) Inventors:
• **Igarashi, Toshio
 Kyoto-shi, Kyoto (JP)**
• **Usui, Nobuhiro
 Takatsuki-shi, Osaka (JP)**
• **Shinohara, Sueharu
 Takatsuki-shi, Osaka (JP)**
• **Tatsumi, Masayuki
 Ibaraki-shi, Osaka (JP)**
• **Mendori, Hiroaki
 Ichihara-shi, Chiba (JP)**

(74) Representative:
**Klunker . Schmitt-Nilson . Hirsch
Winzererstrasse 106
80797 München (DE)**

(56) References cited:
**EP-A- 0 331 447          EP-A- 0 338 860
EP-A- 0 366 407          EP-A- 0 409 992
EP-A- 0 482 778          DE-A- 3 938 082**

• **PATENT ABSTRACTS OF JAPAN vol. 14, no. 488
(M-1039)24 October 1990**
• **PATENT ABSTRACTS OF JAPAN vol. 14, no. 224
(M-0972)11 May 1990**
• **DATABASE WPIL Week 8529, Derwent
Publications Ltd., London, GB; AN 85-173616**
• **PATENT ABSTRACTS OF JAPAN vol. 11, no. 102
(M-576)31 March 1987**
• **DATABASE WPIL Week 9046, Derwent
Publications Ltd., London, GB; AN 90-345050**

## Description

The present invention relates to a multi-layer molded article comprising a skin layer molded from a powder composition containing a particular thermoplastic elastomer and a thermoplastic resin layer, and a process for producing the same.

A multi-layer molded article (JP-A-2198812) comprising a skin layer having a complicate pattern, such as an embossed pattern or a stitch pattern, and a thermoplastic resin layer has hitherto been used as interior decorative material for automobiles, and it is also known that the multi-layer molded article is produced by powder slush molding a vinyl chloride resin powder composition to form a skin layer having a complicatedly shaped pattern and then putting a thermoplastic resin on the skin layer.

In the known multi-layer molded article, however, since a vinyl chloride resin is used as the material for the skin layer, the reduction in weight is unsatisfactory and acidic substances are generated during incineration at the time of scrapping the multi-layer molded article, which produces air pollution, acid rain, etc., so that the non-polluting properties are poor, thereby rendering vinyl chloride resin unsatisfactory as a material for the skin layer.

## SUMMARY OF THE INVENTION

Accordingly, the objects of the present invention are to eliminate the above-mentioned disadvantages of the prior art and to provide a multi-layer molded article comprising a skin layer obtained from powder slush molding and a thermoplastic resin layer, which has a skin layer free from a local reduction in thickness, pinholes and other unfavorable phenomenon and having a pattern that has been exactly transferred from the pattern within the mold and which is excellent in appearance, light weight and non-polluting properties.

Other objects and advantages of the present invention will be apparent from the following description.

In accordance with the present invention, there is provided a multi-layer molded article comprising a skin layer and a thermoplastic resin layer, wherein said skin layer is composed of (i) a layer produced by powder slush molding a powder composition containing the following thermoplastic elastomer (A) or ii) a composite layer composed of said powder molded layer further backed with a foamed layer formed by powder slush molding:

(A) a thermoplastic elastomer comprising a composition composed of an ethylene/$\alpha$-olefin copolymer rubber and a polyolefin resin, or a thermoplastic elastomer comprising a partially crosslinked composition composed of an ethylene/$\alpha$-olefin copolymer rubber and a polyolefin resin, said thermoplastic elastomer having a complex dynamic viscosity $\eta^*(1)$ as measured at a frequency of 1 rad/s at 250°C, of 15.405 Pa·s ($1.5 \times 10^5$ poise) or less, a Newtonian viscosity index, n, calculated from the following formula by using the complex dynamic viscosity $\eta^*(1)$ and the complex dynamic viscosity $\eta^*(100)$ at a frequency of 100 rad/s of less than 0.6:

$$n = (\log\eta^*(1) - \log\eta^*(100))/2.$$

## BRIEF DESCRIPTION OF THE DRAWINGS

The present invention will be better understood from the description set forth below with reference to the accompanying drawings, wherein:

Figure 1 is a sectional view of a container containing a resin composition for powder molding and a powder molding mold;
Fig. 2 is a sectional view of a powder molding mold with a skin material being held therein;
Fig. 3 is a sectional view showing such a state that a powder molding mold with a skin material being held therein is integrated with a mold base and a thermoplastic resin is supplied from a male mold for molding a thermoplastic resin;
Fig. 4 is a sectional view showing such a state that a male mold for molding a thermoplastic resin and a female mold for molding a thermoplastic resin are closed; and
Fig. 5 is a sectional view of a multi-layer molded article comprising a skin material and a thermoplastic resin layer.

## DESCRIPTION OF THE PREFERRED EMBODIMENTS

The present inventors have made extensive and intensive studies with a view to solving the above-mentioned problem and developing a multi-layer molded article free from the above-mentioned drawback. As a result, it has been found that a skin layer free from a local reduction in thickness, pinholes and other unfavorable phenomena, and having a pattern that has been exactly transferred from the pattern within the mold, can be formed, and the multi-layer molded article having a thermoplastic resin laminated thereon is excellent in appearance and light weight and has excellent non-polluting properties, which has led to the completion of the present invention.

The present invention will now be described in more detail.

The multi-layer molded article of the present invention is characterized in that the base material is a thermoplastic resin and the skin layer comprises a layer produced by powder molding a powder composition containing the above-mentioned particular thermoplastic elastomer or a composite layer comprising the powder molded layer further backed with a foamed layer formed by powder molding.

Examples of the ethylene/α-olefin copolymer rubber that is one of the components constituting the thermoplastic elastomer include a rubber composed mainly of an olefin, such as an ethylene/propylene copolymer rubber or an ethylene/propylene/non-conjugated diene copolymer rubber. Examples of the non-conjugated diene include dicyclopentadiene, ethylidenenorbornene, 1,4-hexadiene, cyclooctadiene and methylenenorbornene. In the above-described ethylene/α-olefin copolymer rubbers, an ethylene/propylene/ethylidenenorbornene rubber (hereinafter referred to as "EPDM") is still preferred. The use thereof enables an elastomer having excellent heat resistance, tensile properties and other properties to be produced.

The Mooney viscosity ($ML_{1+4}$ at 100°C) as measured at 100°C according to the method of measuring the Mooney viscosity (ASTM D-927-57T) of the ethylene/α-olefin copolymer rubber is usually 130 to 350, preferably 200 to 300.

Further, the ethylene/α-olefin copolymer rubber can be used in the form of an oil-extended olefin copolymer rubber through the addition of a mineral-oil-based softening agent, such as a paraffinic process oil, to the ethylene/α-olefin copolymer rubber. In this case, the melt fluidity is improved and the flexibility of the molding is improved. The amount of addition of the mineral-oil-based softening agent is usually 120 parts by weight or less, preferably 30 to 120 parts by weight, based on 100 parts by weight of the ethylene/α-olefin copolymer rubber.

Preferred examples of the polyolefin resin that is another component constituting the thermoplastic elastomer include polypropylene, a copolymer of propylene with ethylene and a copolymer of propylene with an α-olefin other than propylene. In particular, it is also possible to lower the hardness of the molding by using a resin of a copolymer of propylene with butene.

When the melt flow rate of the polyolefin resin (MFR as measured according to JIS K-7210 at 230°C under a load of 2.16 kg) is less than 20 g/10 min, it becomes difficult for the powders themselves to be melt-adhered to each other, so that the strength of the molding is lowered. For this reason, use is made of a polyolefin resin having a melt flow rate of usually 20 g/10 min or more. The melt flow rate is preferably 50 g/10 min or more.

The thermoplastic elastomer used in the present invention comprises a composition comprising the above-mentioned ethylene/α-olefin copolymer rubber and polyolefin resin or a partially crosslinked composition produced by subjecting said composition to dynamic crosslinking. The proportion of the ethylene/α-olefin copolymer rubber to the olefin resin is usually 5 : 95 to 80 : 20 in terms of weight ratio.

In producing the partially crosslinked composition, an organic peroxide is used as the crosslinking agent. The organic peroxide is preferably a dialkyl peroxide.

The dynamic crosslinking is preferably conducted in the presence of a crosslinking assistant, such as a bismaleimide compound, by using a very small amount of an organic oxide. In this case, the ethylene/α-olefin copolymer rubber is crosslinked to a suitable extent, which contributes to an improvement in heat resistance and an increase in the fluidity. The crosslinking agent is used in an amount of 1.5 parts by weight or less, preferably 0.6 parts by weight, based on 100 parts by weight in total of the ethylene/α-olefin copolymer rubber and the polyolefin resin. The organic peroxide is used in an amount of 0.2 parts by weight or less, preferably 0.1 part by weight or less, still preferably 0.07 parts by weight or less.

The dynamic crosslinking is favorably conducted by continuous kneading extrusion, such as single screw kneading extrusion or twin screw kneading extrusion. In the case of the twin screw kneading extrusion, when the extrusion crosslinking is conducted at a shear rate of less than $10^3$ s$^{-1}$, the diameter of dispersed particles of the ethylene/α-olefin copolymer rubber becomes so large that it becomes difficult to satisfy the viscosity requirement specified in the present invention. For this reason, it is preferable to conduct the continuous extrusion crosslinking at a shear rate of $10^3$ s$^{-1}$ or more.

In the present invention, the complex dynamic viscosity, $\eta^*(1)$, of the thermoplastic elastomer is 15.405 Pa·s (1.5 x $10^5$ poise) or less, preferably 10.27 Pa·s (1.0 x $10^5$ poise) or less, as measured at 250°C and a frequency of 1 rad/s.

When the complex dynamic viscosity exceeds 15.405 Pa·s (1.5 x $10^5$ poise), the powder of the elastomer is not melt-flown on the surface of the mold, so that it becomes impossible to conduct powder molding wherein the shear rate during molding is as low as 1 s$^{-1}$ or less.

Further, the Newtonian viscosity index, n, calculated from the following formula by using the complex dynamic viscosity $\eta^*(1)$ and the complex dynamic viscosity $\eta^*(100)$ at a frequency of 100 radian/s is less than 0.6, preferably 0.59 or less.

$$n = \{\log\eta^*(1) - \log\eta^*(100)\}/2$$

When the Newtonian viscosity index, n, exceeds 0.6, even though the complex dynamic viscosity, $\eta^*(1)$, is 15.405 Pa·s (1.5 x $10^5$ poise) or less, the dependency of the complex dynamic viscosity upon the frequency becomes large, which causes heat fusing between molten elastomer powder particles to become incomplete in the case of powder molding wherein the shaping pressure is as low as 1 kg/cm$^2$ or less, so that there is a tendency for the resultant molding to have low mechanical properties.

In the present invention, when a partially crosslinked composition is used as the thermoplastic elastomer composition, an uncrosslinked ethylene/α-olefin copolymer rubber can be blended in an amount of 50 parts by weight or less, based on 100 parts by weight of the elastomer for further improving the flexibility of the molding. In this case, propylene, butene, etc. may be used, as the α-olefin, alone or in any combination thereof. An ethylene-propylene copolymer rubber having an ethylene content of 40 to 90 % by weight, preferably 70 to 85 % by weight, and an $ML_{1+4}$ value of 50 or less at 100°C is particularly preferred.

In the present invention, the powder composition containing a thermoplastic elastomer is usually produced by pulverizing the above-mentioned composition containing a thermoplastic elastomer at a low glass transition temperature or lower. For example, freeze pulverization wherein use is made of liquid nitrogen is favorably used. An elastomer composition pellet cooled to -70°C or less, preferably -90°C or less, may be pulverized by a mechanical pulverization method wherein use is made of an impact pulverizing machine, such as a ball mill. When the pulverization is conducted at a temperature higher than -70°C, the particle diameter of the pulverized elastomer powder becomes so coarse that the powder moldability is lowered. In order to prevent the polymer temperature from increasing to a glass transition temperature or greater during pulverization, it is preferable to use a method wherein the amount of heat generated is small and the pulverization efficiency is high. Further, it is preferable that the pulverizing device, as such, be cooled by external cooling, and it is preferable that the resultant elastomer powder be in a state pulverized to such an extent that 95 % or more of the total weight of the powder can pass through a 32-mesh Tyler standard screen scale sieve. When the oversize cumulative percentage of the 32-mesh sieve exceeds 5 %, this becomes one of the causes of the occurrence of uneven thickness. The uneven thickness leads to uneven flexibility of the molding and is liable to cause broken wrinkles, which reduces the commercial value of the product.

In the present invention, the powder composition may contain an internally added release agent, and a methylpolysiloxane compound is favorably used as the internally added release agent.

In this case, the viscosity of the methylpolysiloxane compound at 25°C is preferably $20 \cdot 10^{-6}$ m$^2$/s (20 cSt) or more, still preferably $(50 \text{ to } 5000) \cdot 10^{-6}$ m$^2$/s (50 to 5000 cSt). When the viscosity becomes excessively large, the effect of the release agent is unfavorably lowered.

The content of the internally added release agent is 2 parts by weight or less per 100 parts by weight of the powder composition. When the content exceeds 2 parts by weight, the heat fusion between elastomer powders is inhibited, so that there is a possibility that only a molding having poor mechanical properties is obtained. Further, the release agent bleeds out on the surface of the mold, so that there is a possibility that the mold will be contaminated with the release agent.

The internally added release agent may be incorporated at any time before or after the pulverization.

In the present invention, the powder composition can contain known heat stabilizers, such as phenol type, sulfite type, phenylalkane type, phosphite type, amine type or amide type stabilizers, antioxidants, weatherproofing stabilizers, antistatic agents, metal soaps, lubricants, such as waxes, and pigments for coloration. The incorporation may be conducted at any time before or after pulverization.

The multi-layer molded article (or body) according to the present invention comprises a skin layer produced by powder molding the above-mentioned powder composition. A composite layer comprising the powder-molded layer (non-foamed layer) backed with a foamed layer produced by powder molding a thermoplastic synthetic resin powder containing a foam agent may be used as the skin layer.

In this case, the composite layer can be produced by powder molding a foaming composition, comprising a thermoplastic synthetic resin powder and a heat decomposable foaming agent or a foaming composition comprising a thermoplastic synthetic resin powder and a heat decomposable foaming agent and, incorporated therein, a liquid coating agent, on the reverse surface of the layer formed by powder molding the above-mentioned powder composition and foaming the molding.

Examples of the thermoplastic synthetic resin powder include powders such as a thermoplastic elastomer, a polyethylene resin and a polypropylene resin.

Examples of the thermoplastic elastomer include an elastomer comprising an elastomer composition comprised of an ethylene/α-olefin copolymer rubber and a polyolefin resin of the kinds used in the above-described non-foam layer, an elastomer comprising a partially crosslinked composition comprised of an ethylene/α-olefin copolymer rubber and a polyolefin resin and a thermoplastic elastomer such as a styrene, urethane or polyester thermoplastic elastomer.

Examples of the polyethylene resin include thermoplastic synthetic resins composed mainly of ethylene, such as high-pressure polyethylene, low-pressure polyethylene, linear low-density polyethylene, ethylene/vinyl acetate copolymer, ethylene/methacrylic acid copolymer, ethylene/acrylic ester/maleic anhydride terpolymer, ethylene/glycidyl methacrylate copolymer, ethylene/glycidyl methacrylate/vinyl acetate terpolymer, ethylene/glycidyl methacrylate/methacrylate terpolymer, ethylene/α-olefin copolymer and modified polyolefin.

Examples of the polypropylene resin include homopolypropylene, propylene/ethylene random copolymer, propylene/ethylene block copolymer, propylene/butene random copolymer and propylene/ethylene/butene terpolymer.

Besides the above-mentioned powders, acrylonitrile/butadiene/styrene copolymer, methyl methacrylate/butadiene/styrene copolymer, styrene/butadiene/styrene block copolymer and acrylonitrile/styrene copolymer may be used as the thermoplastic synthetic resin powder.

The thermoplastic synthetic resin powder may be used in the form of any mixture thereof.

The heat decomposable foaming agent is not particularly limited so long as it evolves a gas upon being decomposed during heat melting after powder molding, and use may be made of a general organic or inorganic chemical foaming agent. Specific examples of the chemical foaming agent include azo compounds such as azodicarbonamide, 2,2'-azobisisobutyronitrile, azohexahydrobenzonitrile and diazoaminobenzene; sulfonylhydrazide compounds such as benzenesulfonylhydrazide, benzene-1,3-sulfonylhydrazide, diphenylsulfone-3,3"disulfonylhydrazide, diphenyloxide-4,4'-disulfonylhydrazide, 4,4'-oxybis(benzenesulfonylhydrazide) and p-toluenesulfonylhydrazide; nitroso compounds such as N,N'-dinitrosopentamethylenetetramine and N,N'-dinitroso-N,N'-dimethylterephthalamide; azo compounds such as terephthalazide and p-tert-butylbenzamide; and inorganic compounds such as sodium bicarbonate, ammonium bicarbonate and ammonium carbonate. It is also possible to use them in the form of any mixture thereof. Among them, azodicarbonamide and 4,4'-oxybis(benzenesulfonylhydrazide) are preferable.

The decomposition temperature of the heat decomposable foaming agent is usually in the range of from 120 to 200°C, preferably in the range of from 120 to 180°C. The heat decomposable foaming agent is incorporated in an amount of 2 to 11 parts by weight, preferably 3 to 7 parts by weight, based on 100 parts by weight of the thermoplastic synthetic resin powder.

It is also possible to use a foaming accelerator or a foaming coagent, in combination with the heat decomposable foaming agent for the purpose of lowering the decomposition temperature of the heat decomposable foaming agent. Examples of the foaming accelerator or foaming coagent include inorganic salts such as zinc flower, zinc nitrate, lead phthalate, lead carbonate, trichlorophosphate and tribasic lead sulfate, metal soaps such as zinc fatty acid soap, lead fatty acid soap and cadmium fatty acid soap, borax, acids such as oxalic acid, succinic acid and adipic acid, urea, biurea, ethanolamide, glucose and glycerin.

It is also possible to use a foaming suppressant for the purpose of increasing the decomposition temperature of the heat decomposable foaming agent. Examples of the foaming suppressant include organic acids such as maleic acid, fumaric acid, phthalic acid, maleic anhydride and phthalic anhydride, organic acid halogenides such as stearoyl chloride and phthaloyl chloride, polyhydric alcohols such as hydroquinone, organic-nitrogen-containing compounds such as fatty amine, amide, oxime and isocyanate, organic-sulfur-containing compounds such as mercaptan and sulfides, phosphates such as phosphorous chloride, tin compounds such as dibutyltin maleate, tin chloride and tin sulfate, and other compounds such as hexachlorocyclopentadiene.

The liquid coating agent is preferably a coating agent curable at room temperature to 220°C.

Examples of the coating agent include thermosetting coating agents such as polysiloxane, melamine, urethane and fluoro thermosetting coating agents, polyester resins such as unsaturated polyesters, alkyd, oil-free alkyd and linear polyester resins, amino resins such as melamine resin and modified melamine resin, epoxy resins such as novolak, β-methylepichlorohydrin, alicyclic, aliacyclic, epoxidized fatty acid ester, polycarboxylic ester, aminoglycidyl, chlorinated, resorcin and other types of epoxy resins, polyurethane resins such as one-pack type polyurethane resin of oil-modified, moisture-curable, blocked polyurethane resin and two-pack type polyurethane resin of catalyst-curable, polyol-curable polyurethane resin, and acrylic resins comprising, as a main monomer, organic solvent type, aqueous, non-solvent type or other type acrylic esters or methacrylic esters. Among these liquid coating agents, are polysiloxane, aliacyclic and alicyclic epoxy resins and non-solvent type acrylic resins such as methacrylic esters. Among them, alicyclic epoxy resins curable at room temperature to 150°C and non-solvent type acrylic resins are particularly preferable.

The liquid coating agent that may be used in the present invention usually has a viscosity of about (50 to 50000) $\cdot 10^{-6}$ $m^2/s$ (50 to 50000 cps) at 25°C and may be diluted with a solvent before use.

In the present invention, it is also possible to use a conventional curing agent in combination with the liquid coating agent for the purpose of accelerating the curing of the liquid coating agent. Examples of the curing agent for the epoxy resin include amine curing agents such as diethylenetriamine, triethylenetetramine, tetraethylenepentamine, 2,4,6-tris(dimethylaminomethyl)-phenol and m-xylenediamine, acid anhydrides such as phthalic anhydride, hexahydrophthalic anhydride, methylnadic anhydride and pyromellitic anhydride, polyamide resins and mixtures thereof. Examples of the curing agent for the acrylic resin include dicumyl peroxide, di-tert-butyl peroxide, 2,5-dimethyl-2,5-di(tert-butylperoxy)hexane, benzoyl peroxide and lauroyl peroxide.

The liquid coating agent is incorporated in an amount of 0.1 to 8 parts by weight, preferably 0.2 to 5 parts by weight, based on 100 parts by weight of the thermoplastic synthetic resin powder. The curing agent usable, in the present invention, in combination with the coating agent, is usually incorporated in an amount of 100 parts by weight or less in the case of an acid anhydride and in an amount of 3 parts by weight or less in the case of amine and peroxide curing agents, based on 100 parts by weight of the thermoplastic synthetic resin powder.

In preparing a foamable composition through the incorporation of the above-mentioned agents, the thermoplastic synthetic resin powder is blended with the heat decomposable foaming agent and then with the liquid coating agent.

The multi-layer molded article according to the present invention is characterized in that the skin layer comprises a layer produced by powder molding the above-mentioned powder composition or a composite layer comprising the powder-molded layer (non-foamed layer) further backed with a foamed layer produced by powder molding the above-mentioned foamable composition. In the powder molding, use is made of, for example, a flow immersion method, a powder sintering method, an electrostatic coating method, a powder flame coating method, a powder rotational molding method and a powder slush molding method (see Japanese Unexamined Patent Publication (Kokai) No. 58-132507). Among them, the powder slush molding method is preferred.

For example, when the skin layer comprises a composite layer comprising a non-foamable layer backed with a foamed layer, (1) a container containing a thermoplastic elastomer powder composition and a mold having a complex pattern inside heated to a temperature sufficiently above the melting temperature of the powder are put together and integrated; the powder is adhered to and melted in the cavity, and excess powder is discharged in the container; (2) the container is then removed, and a container containing a foamable composition and a mold having a non-foamable layer produced by the above-mentioned method and heated to a temperature sufficiently above the melting temperature of the foamable composition are integrated in the same manner as that described above; the foamable composition is discharged from the container and adhered to and melted within the non-foamable layer, and the excess powder composition is discharged into the container, and (3) thereafter the container is removed, and the resultant molding is heat-foamed to give a composite layer.

When the foam layer is unnecessary, the skin layer can be produced by conducting the above-mentioned procedure (1).

The multi-layer molded article according to the present invention may be provided with a skin layer comprising a composite layer formed by backing a non-foamed layer with a foamed layer and backing the foamed layer with a non-foamed layer. In this case, the skin layer can be produced by conducting the above-mentioned procedures (1) and (2), conducting the above-mentioned procedure again (1) and then conducting the above-mentioned procedure (3).

The mold heating system is not particularly limited, and examples thereof include a gas heating oven system, an electric heating oven system, a heating medium oil circulation system, a heating medium oil immersion system or a heat flow sand and a high frequency induction heating system. These heating sources may be utilized in the foaming of the molten powder composition.

The powder molding temperature is usually in the range of from 160 to 300°C, preferably in the range of from 180 to 280°c. The molding time is not particularly limited and is properly selected depending upon the size of the molding, the thickness of the molding, etc. The temperature for foaming the foamed layer is usually in the range of from 180 to 280°C, preferably in the range of from 180 to 260°C. The foaming time is not particularly limited and properly selected, depending upon the thickness of the foamed layer and the expansion ratio.

The multi-layer molded article according to the present invention is produced by laminating and integrating the skin layer produced by the above-mentioned method with a thermoplastic layer. Examples of the thermoplastic resin include polypropylene, propylene/α-olefin copolymer, propylene/ethylene copolymer, polystyrene resin, polyethylene resin and methacrylic resin. Among them, polypropylene is preferable from the viewpoint of heat fusion to the thermoplastic elastomer and recycling capabilities.

If necessary, various additives, for example, fillers such as inorganic fillers and glass fibers, pigments, lubricants, antistatic agents and stabilizers can be used.

Examples of the method of laminating and integrating the skin layer with the thermoplastic resin layer include a method that comprises integrating a skin layer formed by powder molding with a mold base within a female or male mold for compression molding with the skin layer being held to the surface of the mold cavity for powder molding, supplying a molten thermoplastic resin between the internal surface of the skin layer (the side of the foamed layer when a foamed layer is provided) and the female or male mold and subjecting the female and male molds to mold clamping to laminate and integrate the skin layer with the thermoplastic resin. According to this method, since the thermoplastic resin is molded in such a state that the skin layer having a pattern transferred from the mold is held to the mold, it is possible to form a multi-layer molded article without breaking the pattern.

The mold for molding the skin layer is not necessarily identical to that for molding the thermoplastic resin. For example, the skin layer is removed from the mold and then held to one of the separate female and male molds, a molten thermoplastic resin is supplied between the skin layer and the remaining mold, and the female and male molds are subjected to mold clamping to laminate and integrate the skin layer material with the thermoplastic resin.

In supplying the molten thermoplastic resin, it is preferable to use a method wherein the mold is clamped while or after supplying the molten thermoplastic resin to the female and male molds. In this method, as opposed to the method wherein the resin is supplied with the mold being clamped it is possible to form a multi-layer molding free from deviation in the skin layer and having an improved pattern transfer.

There is no particular limitation on the method of supplying the molten thermoplastic resin. For example, the molten thermoplastic resin may be supplied through a resin passage provided within the mold opposite the reverse surface of the skin layer in the female and male molds. Further, it is also possible to use a method that comprises inserting a nose for supplying the molten resin between the female and male molds, and then moving the nose backward outside the system to close the female and male molds and conducting molding. Further, it is also possible to use a horizontal clamping molding apparatus.

A mold of the type wherein the outer periphery of the female and male molds is slit for closing the mold. When the clearance of the sliding face of the female and male molds is made substantially equal to the thickness of the skin layer, an article wherein the outer periphery of the molding is completely covered with a skin material by conducting molding in such a manner that excess skin material is allowed to exist at the end of the molding, and then folding back the skin material towards the reverse surface of the molding.

When the skin layer is not heat-fused to the thermoplastic resin, it is possible to interpose an adhesive layer capable of adhering to both materials between the skin layer and the thermoplastic resin. Even when both materials can be heat-fused to each other, the interposition of the intermediate layer having an adhesion to both materials can prevent the skin layer from being excessively influenced by the heat of the molten thermoplastic resin.

Thus, the multi-layer molded article of the present invention can be prepared. The multi-layer molded article of the present invention is excellent in texture and has excellent weight and non-polluting properties, which renders the multi-layer molded article of the present invention useable in various fields.

For example, in the field of automobiles, it is suitable as an interior cover material for, e.g., instrument panels, console boxes, arm rests, head rests, door trims, rear panels, pillar trims, sunvisors, trunk room trims, trunk lid trims, air bag boxes, seat buckles, head liners, glove boxes, and steering wheel covers; interior molded articles such as kicking plates, and change lever boots; exterior parts of automobiles such as spoilers, side moles, number plate housings, mirror housing, air dam skirts and mud guards.

In the field of domestic electric appliances and office automation devices, the multi-layer molded article of the present invention is suitable as exterior members of television sets, video sets, washing machines, dryers, cleaners, coolers and air-conditioners.

In the field of sport goods, it is suitable, for example, as interior material for boats and parts of marine sport tools, and in the field of housing and building, it is suitable, for example, as covering material for furniture, desks, chairs, gates, doors, fences, wall decorative material, ceiling decorative material, indoor kitchen flooring material, washrooms, toilets, etc. Further, it is useable also for industrial parts, general merchandise goods, etc.

EXAMPLE

The present invention will now be further illustrated by, but is by no means limited to, the following Examples.

Example 1

Preparation of Thermoplastic Elastomer Powder

A 40 parts by weight amount of an oil-extended EPDM ($ML_{1+4}$ (100°C) = 53) obtained by adding 100 parts by weight of a mineral oil softener (Dianaprocess® PW-380, manufactured by Idemitsu Kosan Co., Ltd.) to 100 parts by weight of EPDM ($ML_{1+4}$ (100°C) = 242, propylene content = 28 % by weight, iodine value = 12) was kneaded with 60 parts by weight of a propylene-ethylene random copolymer resin (ethylene content = 5 % by weight, MFR = 85 g/10 min) and 0.4 parts by weight of a crosslinking coagent (Sumifine® BM-bismaleimide compound manufactured by Sumitomo Chemical Co., Ltd.) by a Banbury mixer for 10 minutes, and the mixture was extruded to form a masterbatch (hereinafter referred to as "M.B.") for crosslinking, in the shape of pellets.

To 100 parts by weight of M.B., 0.04 parts by weight of an organic peroxide (Sanperox® APO, 2,5-dimethyl-2,5-bis(tert-butylperoxy)hexane, manufactured by Sanken Chemical Co., Ltd.) was added and the mixture was subjected to a dynamic crosslinking at 220°C by using a twin screw kneader (TEX®-44 manufactured by The Japan Steel Works Ltd.) to provide an elastomer composition in the shape of pellets. The composition that was cooled to a temperature of -100°C using liquid nitrogen and freeze-pulverized to provide a thermoplastic elastomer powder for powder molding having a complex dynamic viscosity, $\eta^*(1)$, of $31.83 \cdot 10^3$ Pa·s ($3.1 \times 10^3$ poise) and a Newtonian viscosity index, n, of 0.24.

The powder passed through a 32-mesh Tyler standard sieve at a ratio of 99 % by weight.

Production of Multi-layer Molding

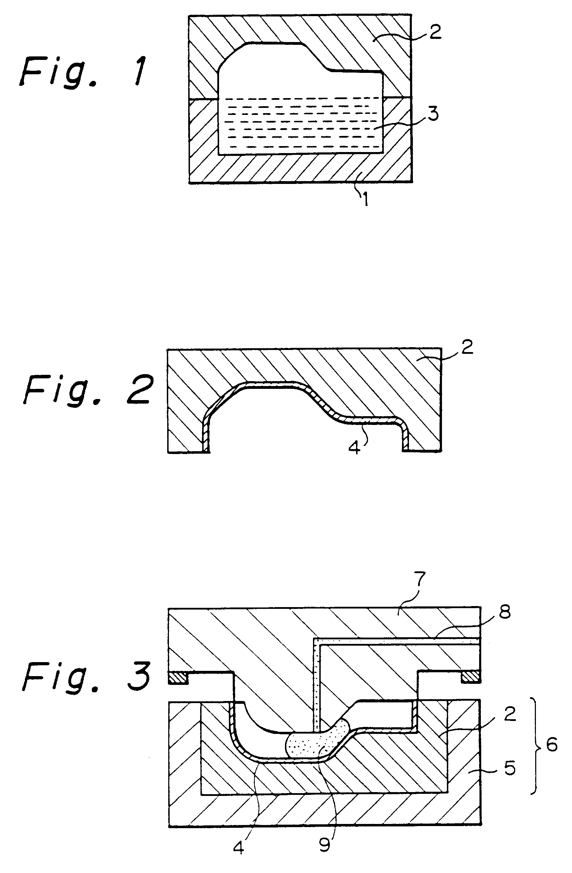

As shown in Fig. 1, the thermoplastic elastomer powder 3 for powder molding thus obtained was placed in a container 1. A powder molding mold 2 having a grain pattern heated to 250°C was placed in such a manner that the opening of the mold conforms to the opening of the container 1. Outer frames mounted around respective openings were bonded and fixed to each other so as to integrate the container with the mold.

The container 1 and the mold 2 integrated together were immediately subjected to rotation and rotation for 5 seconds by a twin screw rotational apparatus so that the powder is supplied within the powder molding mold 2 and adhered to the mold surface having a grain pattern. Then, the rotation was stopped, and excess powder was discharged into the container 1. Thereafter, the mold 2 was removed from the container 1, and the mold 2 was heated at 250°C for 60 seconds and cooled to solidify the melt, thereby forming a skin layer 4 (see Fig. 2).

As shown in Fig. 3, the powder molding mold 2 with the skin layer 4 being held therein was transferred to a thermoplastic resin molding stage wherein the mold 2 was integrated with a mold base 5 to provide a female mold 6 for molding a thermoplastic resin.

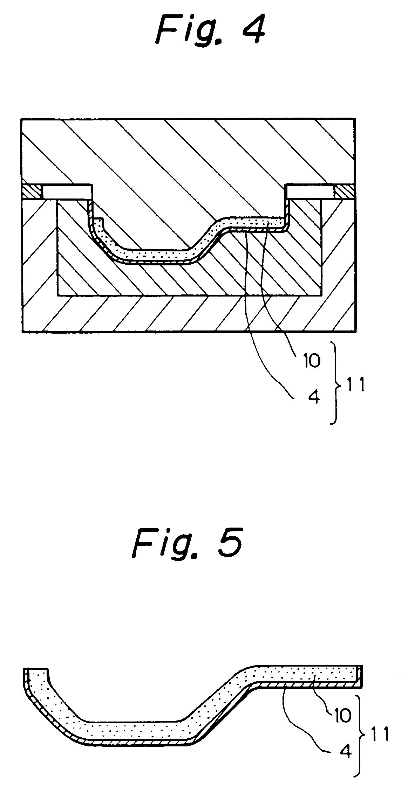

Subsequently, as shown in Fig. 3, a polypropylene resin (Sumitomo Noblen AZ564 having a MFR value of 30 g/10 min and manufactured by Sumitomo Chemical Co., Ltd.) heated to 180°C was supplied as a molten thermoplastic resin 9 through a resin passage 8 between the skin material 4 held within the female mold 6 and the male mold 7 during a period in which the female mold 6 for molding a thermoplastic resin and the mold 7 for molding a thermoplastic resin are not closed. Then, the mold 2 was closed under a molding surface pressure of 55 kg/cm$^2$ by means of a press to complete the thermoplastic resin 10. Thus, a multi-layer molded article 11 comprising a skin layer 4 and a thermoplastic resin 10 integrated with the skin layer as shown in Fig. 4 was obtained.

Fig. 5 is a sectional view of the multi-layer molded article. In the multi-layer molded article thus obtained, the thicknesses of the skin layer and the thermoplastic resin were 0.7 mm and 2.3 mm, respectively. The surface of the molded article had a transferred grain pattern, and an excellent appearance.

Example 2

A non-foamed layer was formed in the same manner as in Example 1, and a container containing a foamable composition (prepared by incorporating 5 parts by weight of azodicarbonamide (Cellmic CAP-500 having a decomposition temperature of 150°C, manufactured by Sankyo Kasei Co., Ltd.) as a heat decomposable foaming agent in 100 parts by weight of the powder molding thermoplastic elastomer powder, which is the same as used in Example 1 was immediately mounted and integrated with the mold. The assembly was subjected to rotation and rotation for 20 seconds by a twin screw rotational apparatus to conduct melting and adherence of the foamable composition, and an excess foamable composition was discharged outside the container.

Then, the mold was removed from the container, the mold was heated at 250°C for 60 seconds to form a foamed layer which was then cooled for solidification, thereby forming a skin layer comprising a non-foamed layer and a foamed layer.

Thereafter, a multi-layer molded article was prepared by providing a thermoplastic resin layer using molten polypropylene resin in the same manner as in Example 1.

In the multi-layer molded article thus obtained, the thickness of the non-foamed layer and the foamed layer in the skin layer was 0.7 mm and 2.5 mm, respectively, and the thickness of the thermoplastic resin layer was 2.0 mm. The surface of the molded article had a grain pattern transferred from the mold, and an excellent appearance .

Example 3

A thermoplastic elastomer powder was prepared in the same manner as in Example 1, except that 60 parts by weight of a propylene/butene random copolymer resin (butene content = 24 % by weight, MFR = 90 g/10 min) was used instead of the propylene/ethylene random copolymer resin. This powder had a complex dynamic viscosity, $\eta^*(1)$, of $70.86 \cdot 10^3$ Pa·s ($6.9 \times 10^3$ poise) and a Newtonian viscosity index, n, of 0.39. The powder passed through a 32-mesh Tyler standard sieve at a ratio of 99 % by weight.

A 5 parts by weight of the same heat decomposable foaming agent as in Example 2 was incorporated into 100 parts by weight of the above-prepared powder, and 0.5 parts by weight of a liquid coating agent (Sumiepoxy® ELA115 which is an alicyclic epoxy resin produced by polymerization of epichlorohydrin and bisphenol A; a product of Sumitomo Chemical Co., Ltd.) and 0.05 parts by weight of triethylenetetramine were further incorporated to provide a foamable thermoplastic elastomer powder composition.

Subsequently, a skin layer comprising a non-foamed layer and a foamed layer was produced in the same manner as in Example 2, except that use was made of the foamable composition prepared above, and a multi-layer molded article was produced in the same manner as in Example 2.

The surface of the molded article had a grain pattern transferred from the mold, and an excellent appearance. The thickness of the non-foamed layer and the foamed layer in the skin layer was 0.7 mm and 3.0 mm, respectively, and the thickness of the thermoplastic resin layer was 1.8 mm.

Example 4

A thermoplastic elastomer powder was prepared in the same manner as in Example 1, except that 50 parts by weight of a propylene/ethylene random copolymer resin (ethylene content = 3 % by weight, MFR = 60 g/10 min) was used, instead of the propylene/ethylene random copolymer resin, and the oil-extended EPDM was used in an amount of 50 parts by weight. This powder had a complex dynamic viscosity, $\eta^*(1)$, of $34.92 \cdot 10^4$ Pa·s ($3.4 \times 10^4$ poise) and a Newtonian viscosity index, n, of 0.59. The powder passed through a 32-mesh Tyler standard sieve at a ratio of 99 % by weight.

Thereafter, a multi-layer molded article was produced in the same manner as in Example 1, except that use was made of the thermoplastic elastomer powder prepared above.

In the multi-layer molded article, the thickness of the skin layer and the thermoplastic resin layer was 0.7 mm and 2.5 mm, respectively. The surface of the molded article had a grain pattern transferred from the mold, and an excellent appearance.

Comparative Example 1

A thermoplastic elastomer powder was prepared in the same manner as in Example 1, except than 50 parts by weight of a propylene/ethylene random copolymer resin (ethylene content = 3 % by weight, MFR = 10 g/10 min) was used as the propylene/ethylene random copolymer resin and the oil-extended EPDM was used in an amount of 50 parts by weight. This powder had a complex dynamic viscosity, $\eta^*(1)$, of $23.62 \cdot 10^5$ Pa $\cdot$ s (2.3 x $10^5$ poise) and a Newtonian viscosity index, n, of 0.76. The powder passed through a 32-mesh Tyler standard sieve at a ratio of 99 % by weight.

Thereafter, a multi-layer molded article was produced in the same manner as in Example 1, except that use was made of the thermoplastic elastomer powder prepared above. The resultant skin layer had poor meltability, many pinholes and was heterogeneous. Then, a multi-layer molded article was produced in the same manner as in Example 1. However, a multi-layer molded article having a homogeneous surface and a good appearance could not be formed.

**Claims**

1. A multi-layer molded article comprising a skin layer and a thermoplastic resin layer, wherein said skin layer is composed of (i) a layer produced by powder slush molding a powder composition containing the following thermoplastic elastomer (A) or (ii) a composite layer composed of said powder molded layer further backed with a foamed layer formed by powder slush molding:

    (A) a thermoplastic elastomer comprising an ethylene/$\alpha$-olefin copolymer rubber and a polyolefin resin, or a partially crosslinked thermoplastic elastomer composition composed of an ethylene/$\alpha$-olefin copolymer rubber and a polyolefin resin; said thermoplastic elastomer having a complex dynamic viscosity $\eta^*(1)$ as measured at a frequency of 1 rad/s at 250°C, of $15.40 \times 10^5$ Pa $\cdot$ s ($1.5 \times 10^5$ poise) or less, a Newtonian viscosity index, n, calculated from the following formula by using the complex dynamic viscosity $\eta^*(1)$ and the complex dynamic viscosity $\eta^*(100)$ at a frequency of 100 rad/s of less than 0.6:

$$n = (\log \eta^*(1) - \log \eta^*(100))/2.$$

2. A multi-layer molded article as claimed in claim 1, wherein the ethylene/$\alpha$-olefin copolymer rubber is an ethylene/propylene/ethylidene norbornene rubber.

3. A multi-layer molded article as claimed in claim 1, wherein the ethylene/$\alpha$-olefin copolymer rubber has a Mooney viscosity ($ML_{1+4}$, 100°C) of 130 to 350.

4. A multi-layer molded article as claimed in claim 1, wherein the ethylene/$\alpha$-olefin copolymer rubber is an oil-extended olefin rubber.

5. A multi-layer molded article as claimed in claim 1, wherein the polyolefin resin is polypropylene, a copolymer of propylene with ethylene or a copolymer of propylene with butene.

6. A multi-layer molded article as claimed in claim 1, wherein the foamed layer is formed from a foamable composition comprising a thermoplastic synthetic resin powder and, incorporated therein, a heat decomposable foaming agent or a combination of a heat decomposable foaming agent- with a liquid coating agent.

7. A multi-layer molded article as claimed in claim 7, wherein the thermoplastic synthetic resin powder is an olefinic thermoplastic elastomer powder.

8. A multi-layer molded article as claimed in claim 6, wherein the thermoplastic synthetic resin powder is a powder of a polypropylene resin.

9. A multi-layer molded article as claimed in claim 6, wherein the heat decomposable foaming agent is used in an amount of 2 to 11 parts by weight, based on 100 parts by weight of the thermoplastic synthetic resin powder.

10. A multi-layer molded articles as claimed in claim 6, wherein the heat decomposable foaming agent is an azo compound or sulfonylhydrazide.

11. A multi-layer molded article as claimed in claim 6, wherein the liquid coating agent is used in an amount of 0.1 to 8 parts by weight, based on 100 parts by weight of the thermoplastic synthetic resin powder.

12. A multi-layer molded article as claimed in claim 6, wherein the liquid coating agent is a polysiloxane, an epoxy resin or an acrylic resin.

**13.** A process for producing a multi-layer molded article composed of a skin layer and a thermoplastic resin layer, comprising the steps of:

forming a skin layer by powder slush molding a powder composition containing the following thermoplastic elastomer (A) and optionally by further backing the above-prepared skin layer with a foamed layer formed by powder slush molding;
holding the skin layer in one of the female and male molds;
supplying a molten thermoplastic resin between said skin layer and the remaining mold; and
subjecting the female and male molds to clamping to laminate and integrate the skin layer with the thermoplastic resin:

(A) a thermoplastic elastomer comprising an ethylene/$\alpha$-olefin copolymer rubber and a polyolefin resin, or a partially crosslinked thermoplastic elastomer composition composed of an ethylene/$\alpha$-olefin copolymer rubber and a polyolefin resin; said thermoplastic elastomer having a complex dynamic viscosity $\eta^*(1)$ as measured at a frequency of 1 rad/s at 250°C, of $15.40 \times 10^5 \text{Pa} \cdot \text{s}$ ($1.5 \times 10^5$ poise) or less, a Newtonian viscosity index, n, calculated from the following formula by using the complex dynamic viscosity $\eta^*(1)$ and the complex dynamic viscosity $\eta^*(100)$ at a frequency of 100 rad/s of less than 0.6:

$$n = \{\log \eta^*(1) - \log \eta^*(100)\}/2.$$

**14.** A process as claimed in claim 13, wherein the mold used for powder molding is used as one of the female and male molds with the skin layer being held therein.

**15.** A process as claimed in claim 13, wherein the ethylene/$\alpha$-olefin copolymer rubber is an ethylene/propylene/ethylidene norbornene rubber.

**16.** A process as claimed in claim 13, wherein the ethylene/$\alpha$-olefin copolymer rubber has a Mooney viscosity ($ML_{1+4}$, 100°C) of 130 to 350.

**17.** A process as claimed in claim 13, wherein the ethylene/$\alpha$-olefin copolymer rubber is an oil-extended olefin rubber.

**18.** A process as claimed in claim 13, wherein the polyolefin resin is polypropylene, a copolymer of propylene with ethylene or a copolymer of propylene with butene.

**19.** A process as claimed in claim 13, wherein the molten thermoplastic resin is a molten polypropylene resin.

**20.** A process as claimed in claim 13, wherein the foam layer is formed from a foamable composition comprising a thermoplastic synthetic resin powder and, incorporated therein, a heat decomposable foaming agent or a combination of a heat decomposable foaming agent with a liquid coating agent.

**21.** A process as claimed in claim 20, wherein the thermoplastic synthetic resin powder is an olefinic thermoplastic elastomer powder.

**22.** A process as claimed in claim 20, wherein the thermoplastic synthetic resin powder is a powder of a polypropylene resin.

**23.** A process as claimed in claim 20, wherein the heat decomposable foaming agent is used in an amount of 2 to 11 parts by weight, based on 100 parts by weight of the thermoplastic synthetic resin powder.

**24.** A process as claimed in claim 20, wherein the heat decomposable foaming agent is an azo compound or sulfonylhydrazide.

**25.** A process as claimed in claim 20, wherein the liquid coating agent is used in an amount of 0.1 to 8 parts by weight, based on 100 parts by weight of the thermoplastic synthetic resin powder.

**26.** A process as claimed in claim 20, wherein the liquid coating agent is a polysiloxane, an epoxy resin or an acrylic resin.

**Patentansprüche**

**1.** Mehrschichtiges Formteil, umfassend eine Hautschicht und eine Thermoplast-Schicht, von denen sich die Hautschicht zusammensetzt aus (i) einer Schicht, die hergestellt wird durch Gießformen einer Pulverzusammensetzung, die das unten angegebene thermoplastische Elastomer (A) enthält, oder (ii) eine Verbundschicht aus der aus Pulver geformten Schicht, die zusätzlich unterstützt wird durch eine aufgeschäumte Schicht, gebildet durch Pulver-Gießformen:

(A) ein thermoplastisches Elastomer, umfassend ein Ethylen/$\alpha$-Olefin-Copolymer-Gummi und ein Polyolefinharz, oder eine teilweise vernetzte Thermoplastelastomer-Zusammensetzung, bestehend aus einem Ethylen/$\alpha$-Olefin-Copolymer-Gummi und einem Polyolefinharz, wobei das Thermoplastelastomer eine komplexe dynamische Zähigkeit $\eta^*(1)$, gemes-

sen bei einer Frequenz von 1 rad/s bei 250°C, von 15,40 x $10^5$Pa · s (1,5 x $10^5$ Poise) oder weniger aufweist, ferner einen Newtonschen Viskositätsindex n, berechnet aus der nachfolgenden Formel unter Verwendung der komplexen dynamischen Viskosität $\eta^*(1)$ und der komplexen dynamischen Viskosität $\eta^*(100)$ bei einer Frequenz von 100 rad/s, von weniger als 0,6 aufweist:

$$n = (\log \eta^*(1) - \log \eta^*(100))/2.$$

2. Mehrschichtiges Formteil nach Anspruch 1, bei dem der Ethylen/$\alpha$-Olefin-Copolymer-Gummi ein Ethylen/Propylen/Ethyliden-Norbornen-Gummi ist.

3. Mehrschichtiges Formteil nach Anspruch 1, bei dem der Ethylen/$\alpha$-Olefin-Copolymer-Gummi eine Mooney-Viskosität ($ML_{1+4}$, 100°C) von 130 bis 350 besitzt.

4. Mehrschichtiges Formteil nach Anspruch 1, bei dem der Ethylen/$\alpha$-Olefin-Copolymer-Gummi ein öl-verstreckter Olefingummi ist.

5. Mehrschichtiges Formteil nach Anspruch 1, bei dem das Polyolefinharz Polypropylen, ein Copolymer aus Propylen mit Ethylen oder ein Copolymer aus Propylen mit Buten ist.

6. Mehrschichtiges Formteil nach Anspruch 1, bei dem die aufgeschäumte Schicht gebildet wird aus einer aufschäumbaren Zusammensetzung, die ein thermoplastisches Kunstharzpulver enthält, in welches ein sich bei Wärme zersetzendes Schäumungsmittel oder eine Kombination aus einem sich bei Wärme zersetzendem Schäumungsmittel mit einem flüssigen Beschichtungsmittel inkorporiert ist.

7. Mehrschichtiges Formteil nach Anspruch 7, bei dem das thermoplastische Kunstharzpulver ein olefinisches thermoplastisches Elastomerpulver ist.

8. Mehrschichtiges Formteil nach Anspruch 6, bei dem das thermoplastische Kunstharzpulver ein Pulver aus einem Polypropylenharz ist.

9. Mehrschichtiges Formteil nach Anspruch 6, bei dem das sich bei Hitze zersetzende Schäumungsmittel in einer Menge von 2 bis 11 Gewichtsteilen verwendet wird, basierend auf 100 Gewichtsteilen des thermoplastischen Kunstharzpulvers.

10. Mehrschichtiges Formteil nach Anspruch 6, bei dem das sich bei Wärme zersetzende Schäumungsmittel eine Azo-Verbindung oder Sulfonylhydrazid ist.

11. Mehrschichtiges Formteil nach Anspruch 6, bei dem das flüssige Beschichtungsmittel in einer Menge von 0,1 bis 8 Gewichtsteilen eingesetzt wird, basierend auf 100 Gewichtsteilen des thermoplastischen Kunstharzpulvers.

12. Mehrschichtiges Formteil nach Anspruch 6, bei dem das flüssige Beschichtungsmittel ein Polysiloxan, ein Epoxyharz oder ein Acrylharz ist.

13. Verfahren zum Herstellen eines mehrschichtigen Formteils, welches sich aus einer Hautschicht und einer Schicht aus einem thermoplastischen Harz zusammensetzt, umfassend die Schritte:

Bilden einer Hautschicht durch Pulvergießformen einer Pulverzusammensetzung, die das unten angegebene thermoplastische Elastomer (A) enthält, und - optional - durch weiteres Unterstützen der in der oben angegebenen Weise hergestellten Hautschicht durch eine geschäumte Schicht, die durch Pulvergießformen gebildet wird;

Aufnehmen der Hautschicht in einer Matrize oder Patrize;

Einbringen eines geschmolzenen thermoplastischen Harzes zwischen die Hautschicht und die verbleibende Form; und

Schließen der Matrize und der Patrize, um die Hautschicht mit dem thermoplastischen Harz zu laminieren und zu integrieren:

(A) ein thermoplastisches Elastomer, umfassend ein Ethylen/$\alpha$-Olefin-Copolymer-Gummi und ein Polyolefinharz, oder eine teilweise vernetzte Thermoplastelastomer-Zusammensetzung, bestehend aus einem Ethylen/$\alpha$-Olefin-Copolymer-Gummi und einem Polyolefinharz, wobei das Thermoplastelastomer eine komplexe dynamische Zähigkeit $\eta^*$ (1), gemessen bei einer Frequenz von 1 rad/s bei 250°C, von 15,40 x $10^5$Pa · s (1,5 x $10^5$ Poise) oder weniger aufweist, ferner einen Newtonschen Viskositätsindex n, berechnet aus der nachfolgenden Formel unter Verwendung der komplexen dynamischen Viskosität $\eta^*(1)$ und der komplexen dynamischen Viskosität $\eta^*(100)$ bei einer Frequenz von 100 rad/s, von weniger als 0,6 aufweist:

$$n = \{\log \eta^*(1) - \log \eta^*(100)\}/2.$$

14. Verfahren nach Anspruch 13, bei dem die zum Pulverformen verwendete Form als Matrize oder Patrize mit der darin aufgenommenen Hautschicht eingesetzt wird.

15. Verfahren nach Anspruch 13, bei dem der Ethylen/$\alpha$-Olefin-Copolymer-Gummi ein Ethylen/Propylen/Ethyliden-Norbonen-Gummi ist.

16. Verfahren nach Anspruch 13, bei dem der Ethylen/$\alpha$-Olefin-Copolymer-Gummi eine Mooney-Viskosität ($ML_{1+4}$, 100°C) von 130 bis 350 aufweist.

17. Verfahren nach Anspruch 13, bei dem der Ethylen/$\alpha$-Olefin-Copolymer-Gummi ein öl-verstreckter Olefingummi ist.

18. Verfahren nach Anspruch 13, bei dem das Polyolefinharz Polypropylen, ein Copolymer aus Propylen mit Ethylen oder ein Copolymer aus Propylen mit Buten ist.

19. Verfahren nach Anspruch 13, bei dem das geschmolzene thermoplastische Harz ein geschmolzenes Polypropylenharz ist.

20. Verfahren nach Anspruch 13, bei dem die Schaumschicht gebildet wird aus einer schäumbaren Zusammensetzung, die ein thermoplastisches Kunstharzpulver mit einem darin inkorporierten, sich bei Wärme zersetzenden Schäumungsmittel oder einer Kombination eines sich bei Wärme zersetzenden Schäumungsmittels mit einem flüssigen Beschichtungsmittel enthält.

21. Verfahren nach Anspruch 20, bei dem das thermoplastische Kunstharzpulver ein olefinisches thermoplastisches Elastomerpulver ist.

22. Verfahren nach Anspruch 20, bei dem das thermoplastische Kunstharzpulver ein Pulver eines Polypropylenharzes ist.

23. Verfahren nach Anspruch 20, bei dem das sich bei Wärme zersetzende Schäumungsmittel in einer Menge von 2 bis 11 Gewichtsteilen verwendet wird, basierend auf 100 Gewichtsteilen des thermoplastischen Kunstharzpulvers.

24. Verfahren nach Anspruch. 20, bei dem das sich bei Hitze zersetzende Schäumungsmittel eine Azo-Verbindung oder ein Sulfonylhyrazid ist.

25. Verfahren nach Anspruch 20, bei dem das flüssige Beschichtungsmittel in einer Menge von 0,1 bis 8 Gewichtsteilen verwendet wird, basierend auf 100 Gewichtsteilen des thermoplastischen Kunstharzpulvers.

26. Verfahren nach Anspruch 20, bei dem das flüssige Beschichtungsmittel ein Polysiloxan, ein Epoxyharz oder ein Acrylharz ist.

**Revendications**

1. Article moulé multicouche comprenant une couche de peau et une couche de résine thermoplastique, dans lequel ladite couche de peau est composée de (i) une couche produite par moulage par embouage à partir de poudres d'une composition pulvérulente contenant l'élastomère thermoplastique (A) suivant ou (ii) une couche composite composée de ladite couche moulée à partir de poudres renforcée en outre par une couche expansée formée par moulage par embouage à partir de poudres :

(A) un élastomère thermoplastique comprenant un caoutchouc copolymère éthylène/$\alpha$-oléfine et une résine de polyoléfine, ou bien une composition élastomère thermoplastique partiellement réticulée composée d'un caoutchouc copolymère éthylène/$\alpha$-oléfine et d'une résine de polyoléfine ; ledit élastomère thermoplastique ayant une viscosité dynamique complexe $\eta^*(1)$, mesurée à une fréquence de 1 rad/s à 250°C, de 15,40 x $10^5$ Pa.s (1,5 x $10^5$ poises) ou moins, un indice de viscosité newtonien, n, calculé a partir de la formule suivante au moyen de la viscosité dynamique complexe $\eta^*(1)$ et de la viscosité dynamique complexe $\eta^*(100)$ à une fréquence de 100 rad/s de moins de 0,6 :

$$n = (\log\eta^*(1) - \log\eta^*(100))/2.$$

2. Article moulé multicouche selon la revendication 1, dans lequel le caoutchouc copolymère éthylène/$\alpha$-oléfine est un caoutchouc éthylène/propylène/éthylidène-norbornène.

3. Article moulé multicouche selon la revendication 1, dans lequel le caoutchouc copolymère éthylène/$\alpha$-oléfine a une viscosité Mooney ($ML_{1+4}$, 100°C) de 130 à 350.

4. Article moulé multicouche selon la revendication 1, dans lequel le caoutchouc copolymère éthylène/$\alpha$-oléfine est un caoutchouc oléfinique allongé à l'huile.

5. Article moulé multicouche selon la revendication 1, dans lequel la résine de polyoléfine est le polypropylène, un copolymère de propylène et d'éthylène ou un copolymère de propylène et de butène.

6. Article moulé multicouche selon la revendication 1, dans lequel la couche expansée est formée d'une composition expansible comprenant une poudre de résine synthétique thermoplastique et, incorporé dedans, un agent porogène thermiquement décomposable ou une combinaison d'un agent porogène thermiquement décomposable et d'un agent de revêtement liquide.

7. Article moulé multicouche selon la revendication 6, dans lequel la poudre de résine synthétique thermoplastique est une poudre d'élastomère thermoplastique oléfinique.

8. Article moulé multicouche selon la revendication 6, dans lequel la poudre de résine synthétique thermoplastique est une poudre d'une résine de polypropylène.

9. Article moulé multicouche selon la revendication 6, dans lequel l'agent porogène thermiquement décomposable est utilisé en une quantité de 2 à 11 parties en poids pour 100 parties en poids de la poudre de résine synthétique thermoplastique.

10. Article moulé multicouche selon la revendication 6, dans lequel l'agent porogène thermiquement décomposable est un composé azoïque ou le sulfonylhydrazide.

11. Article moulé multicouche selon la revendication 6, dans lequel l'agent de revêtement liquide est utilisé en une quantité de 0,1 à 8 parties en poids pour 100 parties en poids de la poudre de résine synthétique thermoplastique.

12. Article moulé multicouche selon la revendication 6, dans lequel l'agent de revêtement liquide est un polysiloxane, une résine époxy ou une résine acrylique.

13. Procédé pour produire un article moulé multicouche composé d'une couche de peau et d'une couche de résine thermoplastique, comprenant les étapes consistant à :

former une couche de peau par moulage par embouage à partir de poudres d'une composition pulvérulente contenant l'élastomère thermoplastique (A) suivant et éventuellement par renforcement en outre de la couche de peau préparée ci-dessus avec une couche expansée formée par moulage par embouage à partir de poudres ;
maintenir la couche de peau dans l'un des moules femelle et mâle ;
délivrer une résine thermoplastique fondue entre ladite couche de peau et le moule restant ; et

soumettre les moules femelle et mâle à un serrage pour stratifier et rendre solidaires la couche de peau et la résine thermoplastique :

(A) un élastomère thermoplastique comprenant un caoutchouc copolymère éthylène/$\alpha$-oléfine et une résine de polyoléfine, ou bien une composition élastomère thermoplastique partiellement réticulée composée d'un caoutchouc copolymère éthylène/$\alpha$-oléfine et d'une résine de polyoléfine ; ledit élastomère thermoplastique ayant une viscosité dynamique complexe $\eta^*(1)$, mesurée à une fréquence de 1 rad/s à 250°C, de 15,40 x $10^5$ Pa.s (1,5 x $10^5$ poises) ou moins, un indice de viscosité newtonien, n, calculé à partir de la formule suivante au moyen de la viscosité dynamique complexe $\eta^*(1)$ et de la viscosité dynamique complexe $\eta^*(100)$ à une fréquence de 100 rad/s de moins de 0,6 :

$$n = (\log\eta^*(1) - \log\eta^*(100))/2.$$

14. Procédé selon la revendication 13, dans lequel le moule utilisé pour le moulage à partir de poudres est utilisé en tant que l'un des moules femelle et mâle contenant la couche de peau.

15. Procédé selon la revendication 13, dans lequel le caoutchouc copolymère éthylène/$\alpha$-oléfine est un caoutchouc éthylène/propylène/éthylidène-norbornène.

16. Procédé selon la revendication 13, dans lequel le caoutchouc copolymère éthylène/$\alpha$-oléfine a une viscosité Mooney (ML$_{1+4}$, 100°C) de 130 à 350.

17. Procédé selon la revendication 13, dans lequel le caoutchouc copolymère éthylène/$\alpha$-oléfine est un caoutchouc oléfinique allongé à l'huile.

18. Procédé selon la revendication 13, dans lequel la résine de polyoléfine est le polypropylène, un copolymère de propylène et d'éthylène ou un copolymère de propylène et de butène.

19. Procédé selon la revendication 13, dans lequel la résine thermoplastique fondue est une résine de polypropylène fondue.

20. Procédé selon la revendication 13, dans lequel la couche de peau est formée à partir d'une composition expansible comprenant une poudre de résine synthétique thermoplastique et, incorporé dedans, un agent porogène thermiquement décomposable ou une combinaison d'un agent porogène thermiquement décomposable et d'un agent de revêtement liquide.

21. Procédé selon la revendication 20, dans lequel la poudre de résine synthétique thermoplastique est une poudre d'élastomère thermoplastique oléfinique.

22. Procédé selon la revendication 20, dans lequel la poudre de résine synthétique thermoplastique est une poudre d'une résine de polypropylène.

23. Procédé selon la revendication 20, dans lequel l'agent porogène thermiquement décomposable est utilisé en une quantité de 2 à 11 parties en poids pour 100 parties en poids de la poudre de résine synthétique thermoplastique.

24. Procédé selon la revendication 20, dans lequel l'agent porogène thermiquement décomposable est un composé azoïque ou le sulfonylhydrazide.

25. Procédé selon la revendication 20, dans lequel l'agent de revêtement liquide est utilisé en une quantité de 0,1 à 8 parties en poids pour 100 parties en poids de la poudre de résine synthétique thermoplastique.

26. Procédé selon la revendication 20, dans lequel l'agent de revêtement liquide est un polysiloxane, une résine époxy ou une résine acrylique.

Fig. 1

Fig. 2

Fig. 3

# Fig. 4

# Fig. 5